# EUROPEAN PATENT SPECIFICATION

(11) **EP 2 109 199 B1**
(45) Date of publication and mention of the grant of the patent: **13.04.2011**
(21) Application number: 08425242.8
(22) Date of filing: 10.04.2008
(51) Int. Cl.: H02G 3/04

(54) **Device for closing a cable raceway, and cable housing assembly**
Vorrichtung zum Schließen einer Kabellaufbahn und Kabelgehäuseanordnung
Dispositif de fermeture d'un chemin de câbles, et ensemble de boîtiers de câbles

(43) Date of publication of application: 14.10.2009
(73) Proprietor: Bocchiotti S.p.A. Societa' per l'Industria Elettrotecnica, I-20124 Milano (IT)
(72) Inventor: Nardi, Ivo, 16154 Genova (IT); Shahbazians, Vahan, 16129 Genova (IT); Calcagno, Marco, 16016 Cogoleto (Genova) (IT); Giusto, Massimo, 16011 Arenzano (Genova) (IT)
(74) Representative: Leihkauf, Steffen Falk

(56) References cited:
- DE-A1- 2 204 221
- DE-U1- 7 910 072
- DE-U1- 8 231 934
- DE-U1- 29 615 854
- FR-A- 2 683 403

## Description

The present invention relates to a device for closing a cable raceway, and to a cable housing assembly.

The electrical systems of buildings, such as houses or offices, are frequently provided with special cable raceways which are arranged along the building walls, or which are arranged in interspaces o space specifically obtained, for example, in the floors.

The raceways are usually used to hold different transmitting means therein, such as electrical cables, telephone pairs, optical fibres, or the like, so as to carry out an integrated distribution of electrical power, voice, and data, in a single network of ducts. FR2683403 describes an example of a known cable raceway.

The cable raceways have a bottom wall, which is usually connected to the surfaces which the raceway is installed on, and two side walls connected to the bottom wall. Such bottom walls define a cable seat therein, which is adapted to house the above-mentioned transmitting means. It is possible to access such cable seat through a special access opening, which is usually arranged between the two side walls of the raceways.

Such access opening is suitable to house devices which can be connected to the cable raceway, which may include, for example, control devices, such as power sockets (typically called "modular devices"), or closing devices, such as removable lids adapted to ensure a proper insulation from the surrounding environment of the cables in the raceway.

The above-mentioned closing devices are removably connected to the cable raceway, for example, by a snap-connection. Such snap-connection is carried out, for example, by special coupling walls of the closing device.

Furthermore, the closing devices are usually provided with two guide walls adapted to be housed in corresponding raceway guide seats, so as to implement a correct relative positioning between closing device and raceway, as well as to allow the closing device sliding relative to the raceway, once the connection has been carried out.

The closing device guide walls and coupling walls are both supported by a closing device covering wall. Such covering wall has the further function of closing the raceway access opening.

A cable housing assembly provided with a device for closing a cable raceway according to the prior art is described, for example, in EP 1 357 652 A1.

However, such known cable housing assemblies are not free from drawbacks.

The coupling of the closing device to the raceway occurs by applying a pressure on the covering wall from outside, such as to allow the mutual coupling thereof. This pressure causes a covering wall flexure, which induces a movement of the guide walls. Consequently, the insertion thereof into the raceway guide seats, therefore the closing device locking on the raceway turn out to be not very effortless and troublesome, in particular if one or more modular devices are associated to the raceway.

Furthermore, under the standard conditions of use (particularly, in the presence of an extraction of an electrical plug from a modular device connected to the raceway, which operation tends to widen the access opening), the closing device covering wall is frequently subjected to forces which generate flexural strains therein, which, in turn, cause a movement of the coupling walls from the operative position thereof. For this reason, it is frequent the unintentional closing device uncoupling from the raceway.

Furthermore, the above-mentioned access opening widening, if it is not sufficiently opposed by the closing device due to its excessive deformability, particularly the flexural deformability, can cause the unintentional withdrawal of the modular device from the raceway.

Therefore, object of the present invention is to provide a closing device which can be easily coupled to a cable raceway, and which is such as to ensure a satisfactory seal of such coupling; that is, in other terms, such as to reduce the risk of an accidental uncoupling between such two components of the cable housing assembly under the standard conditions of use of the latter.

Further object of the present invention is to provide a closing device which is able to reduce the risk of an accidental uncoupling of the control devices, particularly the modular devices, optionally associated to the raceway.

These and other objects are achieved by a closing device which can be coupled to a cable raceway according to claim 1, and a cable housing assembly according to claim 25.

In order to better understand the invention, and appreciate the advantages thereof, some exemplary, non-limiting embodiments thereof will be described herein below, with reference to the annexed Figures, in which:

Fig. 1 is a side view of a cable housing assembly according to the invention;

Fig. 2 is a perspective view of the cable housing assembly in Fig. 1;

Fig. 3 is an exploded, perspective view of the cable housing assembly in Fig. 1;

Fig. 4 is an exploded, perspective view of a cable housing assembly according to a further possible embodiment of the invention.

With reference to the Figures, a housing assembly for electrical cables or the like is generally indicated with the reference numeral 1. The housing assembly 1 comprises a raceway 2 provided with a bottom wall 3, and two side walls 4 and 5 which define a cable seat 6 therein in order to house the cables (not shown in the Figures). The raceway 2 side walls 4 and 5 further define an access opening 7 to the cable seat 6, through which it is possible to access the raceway 2, for example, for installation O maintenance operations on the cables which are housed therein. Control devices, such as, for example, power sockets (typically called "modular devices") can be housed between the side walls 4 and 5 free ends.

In order to carry out the at least partial closure of the raceway 2 access opening 6, which is needed, for example, in order to prevent risks of a contact with electrical cables, or also only due to esthetical reasons, the cable housing assembly 1 comprises a closing device 8 which can be coupled to the raceway 2.

The closing device 8 comprises a covering member 9 intended to at least partially extend into the raceway 2 access opening 7, so as to prevent the at least partial access to the cable seat 6.

The closing device 8 further comprises means 10 adapted to make the connection of the same closing device 8 to the raceway 2 possible. Such connection, particularly, takes place preferably at the raceway 2 side walls 4 and 5, as it will be described more in detail herein below.

Under the standard conditions of use of the housing assembly 1, it is frequent that the closing device 8 is subjected to external forces. For example, when an electrical plug is withdrawn from the modular device associated to the raceway, forces can be generated on the latter, which tend to widen the access opening 7, with the consequent risk of a modular device withdrawal from the same raceway. Such strain forces are conferred to the closing device 8 when the latter is connected to the raceway 2, thus urging it, in particular, to bend.

In order to be able to oppose such raceway strains, particularly to the access opening 7 widening, the closing device 8 comprises special reinforcing means 11 which are operatively connected to the covering member 9. Advantageously, such reinforcing means 11 comprise a reinforcing structure 13 so shaped as a double wall wall. Such reinforcing structure 13 is particularly adapted to minimize the strains due to external forces which act upon the closure device. By the term "double wall wall structure" is meant an assembly which comprises two walls facing one another, mutually distinct and so connected as to form, on the whole, a single structure. The two walls of the double wall wall structure which face one another define a hollow space therebetween.

The presence of the double wall wall structure ensures an overall stiffening of the closing device 8. In this manner, in the presence of forces on the covering member 9 (for example, due to an electrical plug withdrawal from the corresponding modular device), the connecting means 10 movements caused by the covering member 9 residual strains are reduced, thus an accidental closing device 8 uncoupling from the raceway 2 is unlikely. Similarly, in the presence of compressive forces on the covering member 9, the connecting means 10 do not undergo significant movements relative to the suitable positions for the connection to the raceway 2, therefore the assembling step of the cable housing assembly 1 turns out to be extremely simple and easy. Furthermore, the thus-shaped closing device is able to exert an anti-widening action on the access opening 7, thus reducing the risk of an accidental modular device withdrawal from the raceway 2.

In accordance with an embodiment, the covering member 9 comprises a covering wall 16. Such, preferably planar, covering wall 16 is so shaped as to at least partially occlude the raceway 2 access opening 7 when the closing device 8 is connected to the raceway 2, thus preventing access to the cable seat 6. To this aim, the covering wall 16 is preferably essentially complementary to the raceway 2 access opening 7, or at least part of it. For example, access opening 7 and covering wall 16 have essentially rectangular shapes.

Advantageously, the reinforcing means 11 comprise a reinforcing wall 17 distinct from the covering wall 16 and preferably parallel thereto. With further advantage, the reinforcing wall 17 is connected to the covering wall 16 and forms the double wall wall structure 13 along with it. In other terms, reinforcing wall 17 and covering wall 16 form the two walls of the double wall wall structure 13 which stiffens the device 8. Further characteristics of the reinforcing wall will be described in detail herein below.

Advantageously, the connecting means 10 comprise positioning means 14 and locking means 15 for closing device 8 and raceway 2, which are preferably distinct one from the other.

The positioning means 14 have the function of allowing the relative positioning of closing device 8 and raceway 2 in suitable relative positions for a proper coupling thereof.

Furthermore, advantageously, the positioning means 14 comprise guide means 22 which are so shaped as to allow that closing device 8 and raceway 2 perform relative sliding movements once they have been suitably positioned the one over the other, that is, in the position or in the positions such that the closing device 8 can at least partially occlude the access opening 7 to the raceway 2 cable seat 6.

In accordance with an embodiment, the guide means 22 comprise one or more, preferably two, guide walls 23 which are adapted to insert in corresponding raceway 2 guide seats 24. Guide walls 23 and guide seats 24 are so shaped as to be able to slide into the guide seats 24, thus allowing the closing device 8 sliding relative to the raceway 2.

In accordance with an embodiment, the raceway 2 comprises two of such guide seats 24, each formed in one of the side walls 4 and 5 thereof, preferably on projecting portions 25 and 26 ends of each of such side walls 4 and 5. The access opening 7 to the cable seat 6 opens between projecting portions 25 and 26.

According to a possible embodiment, each of the, preferably U-shaped, guide seats 24 is defined by a seat defining wall 27 of the respective projecting portions 25 or 26. Such seat defining wall 27 advantageously ends with an end portion 28 which serves both as a guide track for the guide walls 23, and as a guide for the insertion of corresponding guide walls end portions 29. In order to promote the insertion of the closing device 8 guide walls 23 into the raceway 2 guide seats 24, the guide walls 23 end portions 29 and the seat defining walls 27 end portions 28 advantageously have a pointed shape and are so shaped as to slide one to the other during the insertion operation of the closing device 8 in the raceway 2 access opening 7.

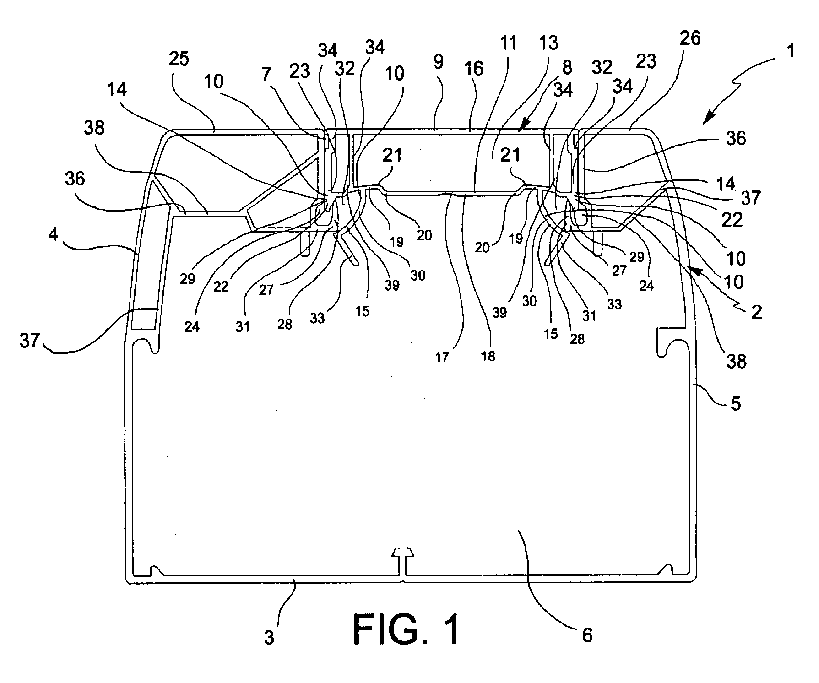

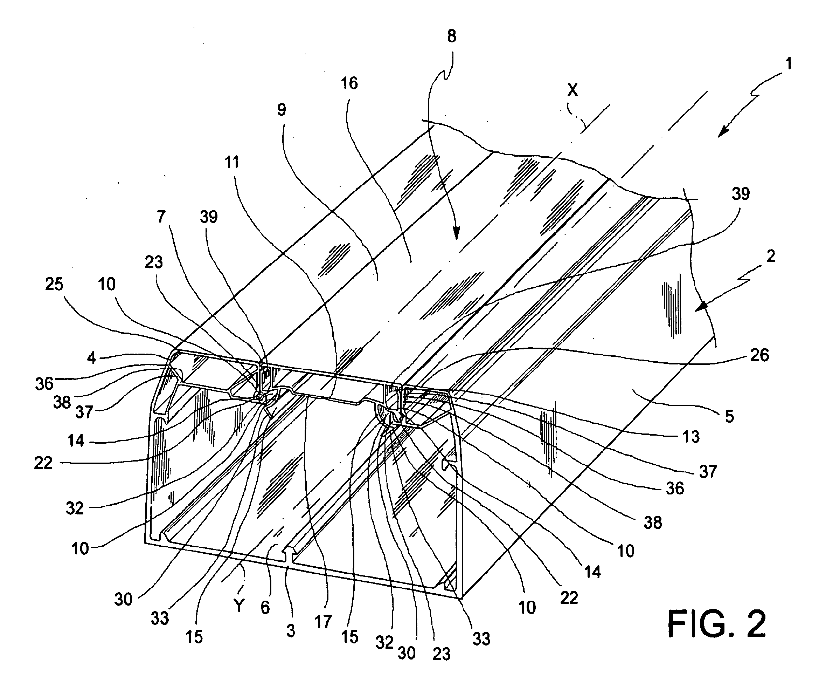

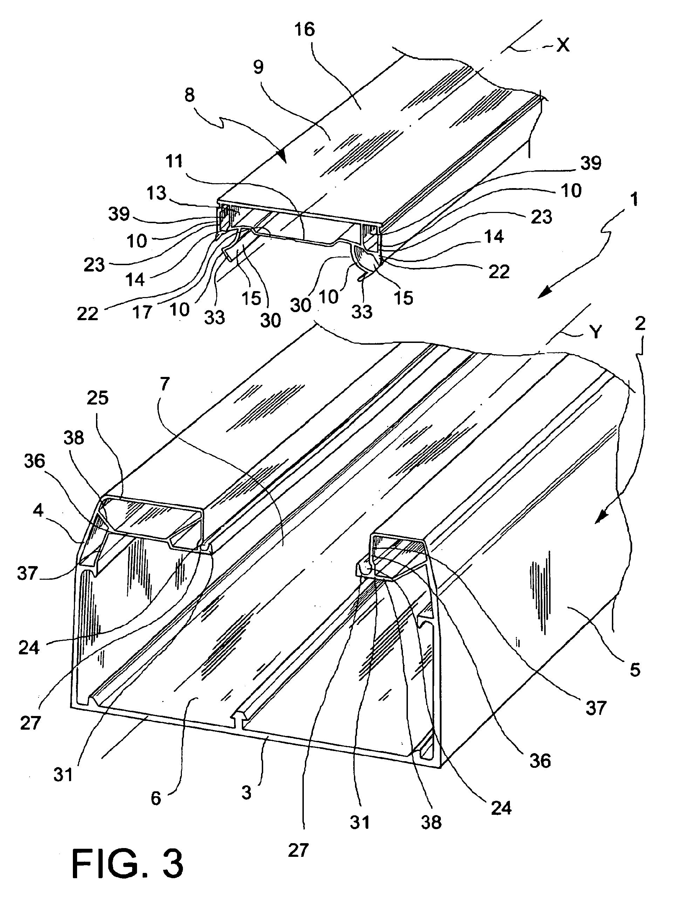

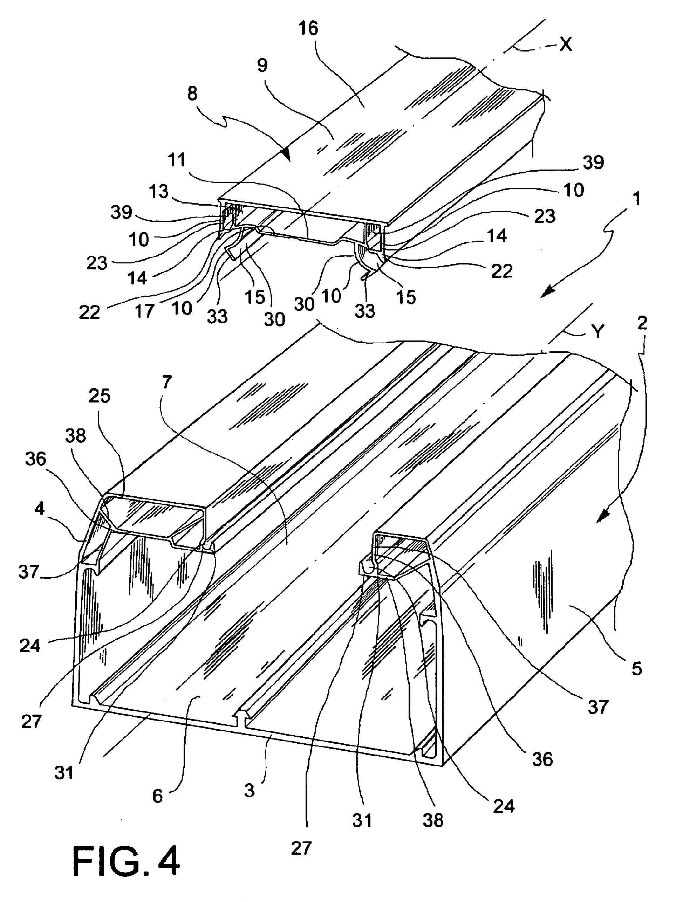

According to a possible embodiment, the guide walls 23 have a partially stepwise trend (Figs. 1-3). According to a further possible embodiment, such guide walls 23 have an essentially continuous trend (Fig. 4).

The locking means 15 have the function of at least partially locking the closing device 8 relative to the raceway 2, once such relative positioning in the suitable positions has been performed.

Advantageously, the locking means 15 comprise one or more, preferably two, coupling walls 30 able to elastically strain, and which are suitable to reversibly couple corresponding raceway 2 coupling portions 31, so as to lock the closing device 8 to the raceway 2.

In accordance with an embodiment, the coupling walls 30 are so shaped as to define coupling seats 32 adapted to house such raceway 2 coupling portions 31. These latter are advantageously formed by the above-mentioned seat defining walls 27 which, beside defining the guide seats 24, are also suitable to engage the coupling walls 30 coupling seats 32. Seat defining walls 27 and coupling walls 30 have such dimensions and configurations so that, once the coupling has been performed, the seat defining walls 27 can disengage the coupling seats 32 only after a deformation of the coupling walls 30. Furthermore, seat defining walls 27 and coupling walls 30 have such dimensions and configurations so that the seat defining walls 27 insertion into the coupling walls 30 coupling seats 32 requires a deformation of the coupling walls 30. In order to induce such coupling walls 30 deformation in an easy manner, the coupling walls 30 advantageously comprise guide portions 33 adapted to slide on the seat defining walls 27 end portions 28 during the insertion operation of the closing device 8 into the raceway access opening 7, that is during the coupling operation. For example, the coupling walls 31 can be essentially L-shaped.

Advantageously, the double wall wall structure 13 supports means connection 10. Particularly, according to a possible embodiment, the reinforcing wall 17 supports the locking means 15, particularly the coupling walls 30.

Advantageously, the reinforcing wall 17 has a complex configuration in the cross-section thereof, that is on the whole non-rectilinear, which is on one hand optimized to resist the stresses which it has to oppose to in order to prevent the access opening 7 widening (tensile strength of the reinforcing wall, particularly in order to implement the anti-widening function of the closing device) and, on the other hand, to increase the movement possibility of the coupling walls 33 so as to promote the covering device 8 insertion and coupling into the access opening 7 (reinforcing wall bendability following compressions due to the coupling walls approaching during the closing device connection operation to the raceway)

In accordance with an embodiment, the reinforcing wall 17 comprises a central portion 18 and, preferably, two side portions 19 arranged at the central portion 18 two sides. Preferably, the central portion 18 has an at least partially thinned conformation. Alternatively, or in addition, such central portion 18 has a variable thickness, such as to implement a slightly arched trend (preferably with concavity facing cable seat. To this regard, see, for example, Fig. 1). The side portions 19 preferably have a curvilinear trend. In accordance with an embodiment, the side portions comprise a concave portion 20, the concavity of which preferably faces the covering wall 12, and a convex portion 21, the concavity of which faces the raceway 2 cable seat 6 when the housing assembly 1 is assembled. Thanks to such configuration of the reinforcing wall 17, in fact, during the closing device 8 insertion in the access opening 7, the reinforcing wall 17 bends, particularly towards the covering wall 16 (in other words, forming a concavity facing the cable seat 6), thus promoting the coupling movement of the coupling walls (which, in order to implement the coupling, have to approach). Furthermore, again thanks to such configuration, the guide walls 23 movements, also in the presence of the reinforcing wall flexure, turn out to be reduced. Furthermore, the reinforcing wall according to such configuration is suitable to oppose to tensile actions (thus imparting a suitable stiffness to the closing device, such as to oppose the optional widening of the raceway 2 access opening 7).

In accordance with an embodiment, the covering wall 16 supports the positioning means 14, particularly the guide walls 23. In this manner, since the covering wall 16 strains are reduced by the double wall wall structure 13, also the undesired guide walls 23 movements relative to the guide seats 24 are reduced, therefore the covering member 9 insertion in the raceway 2 access opening 7 is not hindered.

Alternatively, the positioning means 14, particularly the guide walls 23, can be directly supported by the double wall wall structure 14 reinforcing wall 17.

Preferably, the positioning means 14, particularly the guide walls 23, are connected both to the covering wall 16 and to the reinforcing wall 17. In this manner, the guide walls 23 implement the connection between covering wall 16 and reinforcing wall 17, thus forming the double wall structure 14 along with them.

In accordance with a possible embodiment, the guide walls 23 projects from two side portions of the covering wall 16 towards the inner part of the closing device 8 (that is, towards the raceway 2 cable seat 6, with reference to the assembled cable housing assembly 1). Furthermore, the two guide walls 23 are interconnected by the reinforcing wall 17, transversally thereto.

Alternatively, or in addition, to the connection by means of the guide walls 23, covering wall 16 and reinforcing wall 17 can be connected by a plurality of transversal connecting walls 34. Preferably, the connecting walls 34 are in the number of two and, still more preferably, each of them is arranged in the proximity of one of the guide walls 23. In this manner, each pair comprising a guide wall 23 and a connecting wall 34 forms a double wall wall reinforcement 39 for the double wall wall structure 14. Furthermore, such conformation advantageously creates structural hinges at the intersections of connecting walls 34 and reinforcing wall 17. Such structural hinges further promote the reinforcing wall 17 flexure which has been previously described, without such flexure involving considerable movements of the guide walls 23, all to the advantage of the raceway insertion ease into the access opening.

In accordance with an embodiment, the closing device 8 extends along a preferably rectilinear extension direction X. Furthermore, advantageously, the closing device 8 has, in the section transversal to the extension direction X, a section having a shape which is essentially equal along all the extension length thereof, along such extension direction X. Particularly, preferably, the reinforcing wall 17 extends along such extension direction X. Still more preferably, also the covering wall 16 extends along the extension direction X. With further advantage, the closing device 8 is manufactured in a single piece. Therefore, thanks to such conformation, the closing device can be advantageously manufactured by a mechanical extrusion process.

According to a further aspect of the present invention, the raceway 2 also comprises raceway 2 reinforcing means 36. Particularly, such raceway reinforcing means 36 are such as to stiffen the raceway 2 side walls 4 and 5.

Advantageously, the raceway 2 reinforcing means 36 comprise a plurality of raceway 2 reinforcing walls 37 which are so arranged and connected as to form reinforcing trusses 38. Such reinforcing trusses 38 can be variously shaped. For example, such trusses can have essentially the shape of a trapezium or more trapezia which are mutually interconnected.

Advantageously, the raceway 2 reinforcing trusses 38 are arranged in such positions as to oppose the strains, particularly flexural strains, of the side walls 4 and 5 projecting portions 25 and 26, which are preferably made with mutually different lengths. Due to the different length of the projecting portions 25 and 26, the reinforcing trusses 38 preferably have different configurations in each of the projecting portions 25 and 26. In accordance with an embodiment, the side wall 4 provided with the longer projecting portion 25 is reinforced by one or more reinforcing trusses 38, for example three essentially trapezoidal reinforcing trusses 38. In accordance with a further embodiment, the side wall 5 provided with the shorter projecting portion 26 is instead reinforced by a single, essentially trapezoidal, reinforcing truss 38.

The raceway 2 extends along an extension direction Y, preferably parallel or coincident, once the assembly 1 has been assembled, to the closing device 8 extension direction X and, still more preferably, it has an essentially constant shape in the section transversal to such extension direction Y. Furthermore, advantageously, also the raceway 2 is made of a single piece. In this manner, the raceway 2 can be easily manufactured by a mechanical extrusion process.

From the description provided above, one skilled in the art will be able to appreciate how closing device and cable housing assembly according to the invention solve at least some of the drawbacks cited with reference to the prior art.

Particularly, one skilled in the art will be able to appreciate how the double wall wall reinforcing structure stiffens, on the whole, the closing device. Such stiffening makes so that the closing device, when it is inserted into the raceway access opening, efficaciously opposes the optional strains of the latter. Consequently, the risk of an accidental uncoupling of the same closing device and of optional modular devices associated to the raceway turns out to be reduced.

Furthermore, the particular conformation of the double wall wall reinforcing structure makes so that, in addition to the above-mentioned advantages, the device can be easily connected to the raceway, particularly thanks to the reinforcing wall flexibility, which allows the coupling walls movements without however involving significant movements of the guide walls.

To the embodiments described above, one skilled in the art, to the aim of meeting specific, contingent needs, will be able to make a number of changes, modifications, or replacements of elements with other functionally equivalent ones, without anyhow departng from the scope of the following claims. Each of the characteristics which have been described as belonging to a possible embodiment can be implemented independently from the other embodiments described.

## Claims

1. A closing device (8) which can be coupled to a raceway (2) for holding electrical cables or the like, comprising:
- a covering member (9) intended to at least partially extend into an access opening (7) of said raceway (2);
- means (10) for the connection of said device (8) and said raceway (2);
- reinforcing means (11) operatively connected to said covering member (9),
wherein said reinforcing means (11) comprise a double wall wall-shaped reinforcing structure (13) formed by a covering wall (16) and a reinforcing wall (17) distinct from the covering wall (16) and connected thereto,
wherein said connecting means (10) comprise means for the relative positioning (14) and locking (15) of said closing device (8) to said raceway (2),
wherein said locking means (15) comprise two elastically deformable coupling walls (30) suitable to reversibly couple to corresponding coupling portions (31) of said raceway (2), such as to lock the closing device (8) to the raceway (2), **characterized in that** said coupling walls (30) are supported by said reinforcing wall (17).

2. The device (8) according to the preceding claim, wherein said reinforcing wall (17) is essentially parallel to said covering wall (16).

3. The device (8) according to claim 1-or 2, wherein said reinforcing wall (17) comprises a central portion (18) which is thinned and/or with a varying thickness, such as to implement a slightly arched trend, and two curved side portions (19), each of said side portions (19) comprising a concave portion (20) and a convex portion (21).

4. The device (8) according to any of the claims 1 to 3, wherein said reinforcing wall (17) and said covering wall (16) are connected through a plurality of transversal connecting walls (2.3, 34).

5. The device (8) according to any preceding claim, wherein said double wall wall structure (13) supports said connecting means (10).

6. The device (8) according to claim 1, wherein said locking means (15) are supported by said reinforcing wall (17).

7. The device (8) according to claim 1, wherein said positioning means (14) are supported by said covering wall (16).

8. The device (8) according to claim 1, wherein said positioning means (14) are supported by said reinforcing wall (17).

9. The device (8) according to claim 1, wherein said positioning means (14) are connected to said covering wall (16) and said reinforcing wall (17).

10. The device (8) according to any of the claims 1 to 9, wherein said positioning means (14) comprises guide means (22) so shaped as to allow a relative sliding of closing device (8) and raceway (2).

11. The device (8) according to the receding claim, wherein said guide means (22) comprise two guide walls (23) adapted to insert into corresponding raceway (2) guide seats (24) so as to allow said relative sliding between closing device (8) and raceway (8).

12. The device (8) according to the preceding claim, wherein said guide walls (23) project from two side portions of said covering wall (16) towards the inner part of the closing device (8).

13. The device (8) according to claim 11 or 12, wherein said guide walls (23) connect said covering wall (16) and said reinforcing wall (17).

14. The device (8) according to any of the claims 11 to 13, wherein said reinforcing wall (17) is connected to said covering wall (16) through said two guide walls (23) and two further walls of said transversal connecting walls (34), such as to form double wall wall reinforcements (39) for said double wall wall structure (14) with each of said guide walls (23).

15. The device (8) according to any preceding claim, wherein said device (8) extends along an extension direction (X) and has a cross-section, which is essentially equal along all the extension length thereof along said extension direction (X).

16. The device (8) according to the preceding claim, wherein said closing device (8) extension direction (X) is essentially rectilinear.

17. The device (8) according to any preceding claim, wherein said closing devices (8) is manufactured in a single piece.

18. The device (8) according to any of the claims 20 to 22, wherein said reinforcing wall (17) extends along said extension direction (X).

19. The device (8) according to any of the claims 15 to 18, wherein said covering wall (16) extends along said extension direction. (X).

20. An assembly (1) for the housing of electrical cables or the like, comprising a raceway (2) adapted to house said cables inside a cable seat (6), and a closing device (8) which can be coupled to said raceway (2) and intended to at least partially occlude an opening (7) for the access to said raceway (2) cable seat (6), wherein said closing device (8) is manufactured according to any preceding claim.

21. The assembly according to the preceding claim, wherein said raceway (2) comprises two side walls (4, 5) which define said cable seat (6), said raceway (2) side walls (4, 5) being reinforced by raceway (2) reinforcing walls (37).

## Patentansprüche

1. Schließvorrichtung (8), die mit einem Leitungskanal (2) zum Aufnehmen elektrischer Kabel oder dergleichen gekoppelt werden kann, wobei sie umfasst:
- ein Abdeckelement (9), das sich wenigstens teilweise in eine Zugangsöffnung (7) des Leitungskanals (2) hinein erstrecken soll;
- Einrichtungen (10) für die Verbindung der Vorrichtung (8) und des Leitungskanals (2);
- eine Verstärkungseinrichtung (11), die funktional mit dem Abdeckelement (9) verbunden ist,
wobei die Verstärkungseinrichtung (11) eine doppelwandige wandförmige Verstärkungsstruktur (13) umfasst, die durch eine Abdeckwand (16) und eine Verstärkungswand (17) gebildet wird, die von der Abdeckwand (16) getrennt und mit ihr verbunden ist, wobei die Verbindungseinrichtungen (10) Einrichtungen zum relativen Positionieren (14) und Arretieren (15) der Schließvorrichtung (8) an dem Leitungskanal (2) umfassen,
die Arretiereinrichtungen (15) zwei elastisch verformbare Kopplungswände (30) umfassen, die sich zum umkehrbaren Koppeln mit entsprechenden Kopplungsabschnitten (31) des Leitungskanals (2) eignen, um so die Schließvorrichtung (8) an dem Leitungskanal (2) zu arretieren,
**dadurch gekennzeichnet, dass** die Kopplungswände (30) von der Verstärkungswand (17) getragen werden.

2. Vorrichtung (8) nach dem vorangehenden Anspruch, wobei die Verstärkungswand (17) im Wesentlichen parallel zu der Abdeckwand (16) ist.

3. Vorrichtung (8) nach Anspruch 1 oder 2, wobei die Verstärkungswand (17) einen Mittelabschnitt (18), der verdünnt ist und/oder veränderliche Dicke aufweist, so dass ein geringförmig gewölbter Verlauf entsteht, sowie zwei gekrümmte Seitenabschnitte (19) umfasst, wobei jeder der Seitenabschnitte (19) einen konkaven Abschnitt (20) und einen konvexen Abschnitt (21) umfasst.

4. Vorrichtung (8) nach einem der Ansprüche 1 bis 3, wobei die Verstärkungswand (17) und die Abdeckwand (16) über eine Vielzahl von Quer-Verbindungswänden (23, 34) verbunden sind.

5. Vorrichtung (8) nach dem vorangehenden Anspruch, wobei die doppelwandige Wandstruktur (13) die Verbindungseinrichtungen (10) trägt.

6. Vorrichtung (8) nach Anspruch 1, wobei die Arretiereinrichtungen (15) von der Verstärkungswand (17) getragen werden.

7. Vorrichtung (8) nach Anspruch 1, wobei die Positioniereinrichtungen (14) von der Abdeckwand (16) getragen werden.

8. Vorrichtung (8) nach Anspruch 1, wobei die Positioniereinrichtungen (14) von der Verstärkungswand (17) getragen werden.

9. Vorrichtung (8) nach Anspruch 1, wobei die Positioniereinrichtungen (14) mit der Abdeckwand (16) und der Verstärkungswand (17) verbunden sind.

10. Vorrichtung (8) nach einem der Ansprüche 1 bis 9, wobei die Positioniereinrichtungen (14) Führungseinrichtungen (22) umfassen, die so geformt sind, dass sie relatives Verschieben der Schließvorrichtung (8) und des Leitungskanals (2) ermöglichen.

11. Vorrichtung (8) nach dem vorangehenden Anspruch, wobei die Führungseinrichtungen (22) zwei Führungswände (23) umfassen, die zum Einführen in entsprechende Führungsaufnahmen (24) des Leitungskanals (2) eingerichtet sind, um die relative Verschiebung der Schließvorrichtung (8) und des Leitungskanals zu ermöglichen.

12. Vorrichtung (8) nach dem vorangehenden Anspruch, wobei die Führungswände (23) von zwei seitlichen Abschnitten der Abdeckwand (16) auf den inneren Teil der Schließvorrichtung (8) zu vorstehen.

13. Vorrichtung (8) nach Anspruch 11 oder 12, wobei die Führungswände (23) die Abdeckwand (16) und die Verstärkungswand (17) verbinden.

14. Vorrichtung (8) nach einem der Ansprüche 11 bis 13, wobei die Verstärkungswand (17) mit der Abdeckwand (16) über die zwei Führungswände (23) und zwei weitere Wände der Quer-Verbindungswände (34) so verbunden ist, dass sie doppelwandige Wandverstärkungen (39) für die doppelwandige Wandstruktur (14) mit jeder der Führungswände (23) bildet.

15. Vorrichtung (8) nach einem der vorangehenden Ansprüche, wobei sich die Vorrichtung (8) in einer Verlaufsrichtung (X) erstreckt und einen Querschnitt hat, der im Wesentlichen über die gesamte Verlaufslänge derselben in der Verlaufsrichtung (X) gleich ist.

16. Vorrichtung (8) nach dem vorangehenden Anspruch, wobei die Verlaufsrichtung (X) der Schließvorrichtung (8) im Wesentlichen geradlinig ist.

17. Vorrichtung (8) nach einem der vorangehenden Ansprüche, wobei die Schließvorrichtung (8) aus einem Teil hergestellt wird.

18. Vorrichtung (8) nach einem der Ansprüche 20 bis 22, wobei die Verstärkungswand (17) in der Verlaufsrichtung (X) verläuft.

19. Vorrichtung (8) nach einem der Ansprüche 15 bis 18, wobei die Abdeckwand (16) in der Verlaufsrichtung (X) verläuft.

20. Anordnung (1) zur Aufnahme elektrischer Kabel oder dergleichen, die einen Leitungskanal (2), der zum Aufnehmen der Kabel im Inneren einer Kabelaufnahme (7) eingerichtet ist, und eine Schließvorrichtung (8) umfasst, die mit dem Leitungskanal (2) gekoppelt werden kann und eine Öffnung (7) für den Zugang zu der Kabelaufnahme (6) des Leitungskanals (2) wenigstens teilweise verdecken soll, wobei die Schließvorrichtung (8) gemäß einem der vorangehenden Ansprüche hergestellt wird.

21. Anordnung nach dem vorangehenden Anspruch, wobei der Leitungskanal (2) zwei Seitenwände (4, 5) umfasst, die die Kabelaufnahme (6) bilden, und die Seitenwände (4, 5) des Leitungskanals (2) durch Verstärkungswände (37) des Leitungskanals (2) verstärkt werden.

## Revendications

1. Dispositif de fermeture (8) qui peut être couplé à un chemin de câbles (2) destiné à contenir des câbles électriques ou similaires, comprenant .
- un élément de couverture (9), destiné à s'étendre au moins partiellement dans une ouverture d'accès (7) dudit chemin de câbles (2) ;
- un moyen (10) destiné à connecter ledit dispositif (8) et ledit chemin de câbles (2) ;
- un moyen de renforcement (11) connecté en service avec ledit élément de couverture (9) ;
dans lequel ledit moyen de renforcement (11) comprend une structure de renforcement à double paroi en forme de cloison (13) formée par une cloison de couverture (16) et une cloison de renforcement (17) distincte de la cloison de couverture (16) et connectée à celle-ci ;
dans lequel ledit moyen de connexion (10) comprend des moyens destinés à réaliser un positionnement relatif (14) et un verrouillage (15) dudit dispositif de fermeture (8) sur ledit chemin de câbles (2) ;
dans lequel ledit moyen de verrouillage (15) comprend deux cloisons de couplage (30), déformables élastiquement, aptes à réaliser un couplage réversible avec des parties de couplage correspondantes (31) dudit chemin de câbles (2), par exemple à verrouiller le dispositif de fermeture (8) sur le chemin de câbles (2) ;
**caractérisé en ce que** lesdites cloisons de couplage (30) sont supportées par ladite cloison de renforcement (17) .

2. Dispositif (8) selon la revendication précédente, dans lequel ladite cloison de renforcement (17) est essentiellement parallèle à ladite cloison de couverture (16) .

3. Dispositif (8) selon la revendication 1 ou 2, dans lequel ladite cloison de renforcement (17) comprend une partie centrale (19) qui est affinée et/ou possède une épaisseur variable, afin de réaliser une légère forme d'arche, et deux parties latérales courbes (19), chacune desdites parties latérales (19) comprenant une partie concave (20) et une partie convexe (21).

4. Dispositif (8) selon l'une quelconque des revendications 1 à 3, dans lequel ladite cloison de renforcement (17) et ladite cloison de couverture (16) sont connectées par une pluralité de cloisons de connexion (23, 24) transversales.

5. Dispositif (8) selon l'une quelconque des revendications précédentes, dans lequel ladite structure à double paroi en forme de cloison (13) supporte ledit moyen de connexion (10).

6. Dispositif (8) selon la revendication 1, dans lequel ledit moyen de verrouillage (15) est supporté par ladite cloison de renforcement (17).

7. Dispositif (8) selon la revendication 1, dans lequel ledit moyen de positionnement (14) est supporté par ladite cloison de couverture (16).

8. Dispositif (8) selon la revendication 1, dans lequel ledit moyen de positionnement (14) est supporté par ladite cloison de renforcement (17).

9. Dispositif (8) selon la revendication 1, dans lequel ledit moyen de positionnement (14) est connecté à ladite cloison de couverture (16) et à ladite cloison de renforcement (17).

10. Dispositif (8) selon l'une quelconque des revendications 1 à 9, dans lequel ledit moyen de positionnement (14) comprend un moyen de guidage (22) formé de manière à permettre un coulissement relatif entre le dispositif de fermeture (8) et le chemin de câbles (2).

11. Dispositif (8) selon la revendication précédente, dans lequel ledit moyen de guidage (22) comprend deux parois de guidage (23) conçues pour s'insérer dans des logements de guidage (24) correspondants du chemin de câbles (2) afin de permettre ledit coulissement relatif entre le dispositif de fermeture (8) et le chemin de câbles (2).

12. Dispositif (8) selon la revendication précédente, dans lequel lesdites parois de guidage (23) font saillie par rapport à deux parties latérales de ladite cloison de couverture (16), en direction de la partie intérieure du dispositif de fermeture (8).

13. Dispositif (8) selon la revendication 11 ou 12, dans lequel lesdites parois de guidage (23) connectent ladite cloison de couverture (16) avec ladite cloison de renforcement (17).

14. Dispositif (8) selon l'une quelconque des revendications 11 à 13, dans lequel ladite cloison de renforcement (17) est connectée à ladite cloison de couverture (16) à l'aide desdites deux parois de guidage (23) et de deux autres cloisons desdites cloisons transversales de connexion (34), afin de former des renforcements à double paroi (39) pour ladite structure de cloison à double paroi (14) avec chacune desdites parois de guidage (23).

15. Dispositif (8) selon l'une quelconque des revendications précédentes, dans lequel ledit dispositif (8) s'étend dans une direction d'extension (X) et a une section transversale qui est essentiellement identique sur toute la longueur d'extension dans ladite direction d'extension (X).

16. Dispositif (8) selon la revendication précédente, dans lequel ladite direction d'extension (X) du dispositif de fermeture (8) est essentiellement rectiligne.

17. Dispositif (8) selon l'une quelconque des revendications précédentes, dans lequel ledit dispositif de fermeture (8) est fabriqué d'une seule pièce.

18. Dispositif (8) selon l'une quelconque des revendications 20 à 22, dans lequel ladite cloison de renforcement (17) s'étend dans ladite direction d'extension (X) .

19. Dispositif (8) selon l'une quelconque des revendications 15 à 18, dans laquelle ladite cloison de couverture (16) s'étend dans ladite direction d'extension (X).

20. Ensemble (1) destiné à recevoir des câbles électriques ou similaires, comprenant un chemin de câbles (2) conçu pour abriter lesdits câbles dans un logement de câbles (6) et un dispositif de fermeture (8) qui peut être couplé avec le chemin de câbles (2) et qui est destiné à fermer au moins partiellement une ouverture (7) permettant d'accéder audit logement de câbles (6) dudit chemin de câbles .(2), ledit dispositif de fermeture (8) étant fabriqué selon l'une quelconque des revendications précédentes.

21. Ensemble selon la revendication précédente, dans lequel ledit chemin de câbles (2) comprend deux cloisons latérales (4, 5) qui définissent ledit logement de câbles (6), lesdites cloisons latérales (4, 5) du chemin de câbles (2) étant renforcées par des cloisons de renforcement (37) du chemin de câbles (2).
